# EUROPEAN PATENT SPECIFICATION

(11) **EP 2 210 389 B1**
(45) Date of publication and mention of the grant of the patent: **24.08.2011**
(21) Application number: 08736160.6
(22) Date of filing: 11.04.2008
(51) Int. Cl.: H04L 29/06

(54) **Apparatus, method, and computer program for establishing a service session**
Vorrichtung, Verfahren und Computerprogramm zur Herstellung einer Dienstsitzung
Appareil, procédé et programme d'ordinateur pour établir une session de service

(30) Priority: 11.10.2007 US 870508
(43) Date of publication of application: 28.07.2010
(73) Proprietor: Sony Ericsson Mobile Communications AB, 221 88 Lund (SE)
(72) Inventor: BENGTSSON, Henrik, S-227 38 Lund (SE)
(74) Representative: Schwarz, Markku
(86) International application number: PCT/EP2008/054451
(87) International publication number: WO 2009/047019

(56) References cited:
- US-A1- 2003 195 010

## Description

### Field of invention

The present invention relates to methods of establishing a service session, computer readable mediums comprising program code for establishing the service session, and a server arranged for establishing the service session.

### Background of invention

Convergence between different apparatuses and their communication capabilities has become a major issue for providing neat and usable services to users. US 2003/195010 A1 discloses emulating a first wireless communication device on a wide area network with a second wireless communication device utilizing a local link. The first wireless communication device transmits identity information to the second wireless communication device over the local link. The second wireless communication device accesses a wide area network using the identity information received. This facilitates emulation of a wireless communication device without exchanging a removable identity module, allowing use of the identity, phone number, or service contract of the first device, and availing the features and systems supported by the second device. A problem arises when a user has a multitude of apparatuses, each being in communication via one or more communication networks, and each being associated with a service provider and a subscription to the services provided with the service provider. This makes convergence, and thus usability, suffer. A further issue is that each apparatus may need a subscription identification module, which also increases costs, and needs to be dedicated to the presumed use of the apparatus, which decreases flexibility. There is a need to provide a simplified approach to provide convergence between apparatuses of a user.

### Summary

The present invention is based on the understanding that a user normally has an apparatus that is used on a daily basis and which is associated with a subscription, which uniquely identifies the apparatus, below called a primary entity, e.g. a mobile phone with a mobile phone subscription. The present invention is further based on the understanding that provision of identification and/or authentication of further apparatuses, below called further (secondary, tertiary, ...) entities, by a simple user action which relies on the unique identification of the primary entity can be performed in a flexible way without dedicated hardware in the further apparatuses. By this simple approach, convergence of apparatuses using a service provided by a server of a service provider can be provided.

According to a first aspect of the present invention, there is provided a method of establishing a service session via a server with a secondary entity of a first user having a primary entity associated with a subscription. The method comprises
sending a unique identifier of the first user's subscription from the secondary entity to the server;
receiving from the server a symbol sequence to the secondary entity;
enabling sending of the symbol sequence from the primary entity to the server such that the server is able to match that the received symbol sequence and the sent symbol sequence are identical, wherein a match confirms that the secondary entity is authenticated if the primary entity is authenticated; and
setting up the service session on the secondary entity.

The enabling may comprise displaying the received symbol sequence by the secondary entity; and enabling input of the symbol sequence through a user interface of the primary entity.

Authentication of the primary entity may comprise sending an assigned identifier and a unique identifier of the subscription associated with the primary entity from the primary entity on a connection between the primary entity and the server such that the server is able to verify that the assigned identifier and the unique identifier of the user's phone subscription are matching. The authentication of the primary entity may further comprise an initial authentication process, wherein the process may comprise receiving a random identifier from the server to be used as assigned identifier; sending the assigned identifier via a messaging service to the server such that the server is able to match that the received assigned identifier and the random identifier are identical, wherein a match confirms that the primary entity is authenticated.

The service session may be an established service session on the primary entity, or the service session may be initiated by the secondary entity.

The method may further comprise sending a notification from the primary entity to the server that the service session should be moved to the primary entity; and setting up the service session on the primary entity.

The method may further comprise sending a unique identifier of the first user's subscription from a tertiary entity to the server; receiving from the server a symbol sequence to the tertiary entity; sending the symbol sequence from the primary or secondary entity to the server such that the server is able to match that the received symbol sequence and the sent symbol sequence are identical, wherein a match confirms that the tertiary entity is authenticated the entity sending the symbol sequence is authenticated; and setting up the service session on the tertiary entity. The method may further comprise sending a notification to the server that the service session should be moved to the primary entity; and setting up the service session on the primary entity. The method may further comprise displaying the received symbol sequence by the tertiary entity; and enabling input of the symbol sequence through a user interface of the primary or secondary entity.

According to a second aspect of the present invention, there is provided a method of establishing a service session on a secondary entity of a first user having a primary entity associated with a subscription by a server. The method comprises
receiving a unique identifier of the first user's subscription from the secondary entity;
generating a symbol sequence;
sending the symbol sequence to the secondary entity;
receiving a symbol sequence from the primary entity;
matching that the received symbol sequence and the sent symbol sequence are identical, wherein a match confirms that the secondary entity is authenticated if the primary entity is authenticated; and
setting up the service session to the secondary entity.

Authentication of the primary entity may comprise receiving an assigned identifier and a unique identifier of the subscription associated with the primary entity from the primary entity on a connection between the primary entity and the server; verifying that the assigned identifier and the unique identifier of the user's subscription are matching. The authentication may further comprise an initial authentication process, the process comprising generating a random identifier; sending the random identifier to the entity of the user to be used as assigned identifier; receiving an assigned identifier via a messaging service from the primary entity; matching that the received assigned identifier and the random identifier are identical, wherein a match confirms that the primary entity of the user is authenticated.

The service session may be an established service session on the primary entity, or initiated by the secondary entity.

The method may further comprise receiving a notification from the primary entity that the service session should be moved to the primary entity; and setting up the service session on the primary entity.

The method may further comprise receiving a unique identifier of the first user's subscription from a tertiary entity; generating a second symbol sequence; sending the second symbol sequence to the tertiary entity; receiving a symbol sequence from the primary or secondary entity to the server such that the server is able to match that the received symbol sequence and the sent secondary symbol sequence are identical, wherein a match confirms that the tertiary entity is authenticated if the entity sending the symbol sequence is authenticated; and setting up the service session on the tertiary entity. The method may further comprise receiving a notification from the primary entity that the service session should be moved to the primary entity; and setting up the service session on the primary entity.

According to a third aspect of the present invention, there is provided a computer readable medium comprising program code, which when executed by a processor is arranged to cause the processor to perform
reception of a unique identifier of the first user's subscription from the secondary entity;
generation of a symbol sequence;
sending of the symbol sequence to the secondary entity;
reception of a symbol sequence from the primary entity;
matching that the received symbol sequence and the sent symbol sequence are identical, wherein a match confirms that the secondary entity is authenticated if the primary entity is authenticated; and
setting up a service session to the secondary entity.

According to a fourth aspect of the present invention, there is provided a computer readable medium comprising program code, which when executed by a processor is arranged to cause the processor to perform
sending of a unique identifier of the first user's subscription from the secondary entity to the server;
reception from the server a symbol sequence to the secondary entity;
enabling of sending of the symbol sequence from the primary entity to the server such that the server is able to match that the received symbol sequence and the sent symbol sequence are identical, wherein a match confirms that the secondary entity is authenticated if the primary entity is authenticated; and
setting up the service session on the secondary entity.

The performing of the enabling of sending may comprise displaying of the received symbol sequence by the secondary entity.

According to a fifth aspect of the present invention, there is provided a server arranged for establishing a service session to a secondary entity of a first user having a primary entity associated with a subscription, the server comprising
a receiver arranged to receive a unique identifier of the first user's subscription from the secondary entity;
a symbol sequence generator arranged to generate a symbol sequence;
a transmitter arranged to send the symbol sequence to the secondary entity, wherein the receiver is further arranged to receive a symbol sequence from the primary entity;
a comparator arranged to compare the received symbol sequence and the sent symbol sequence, wherein the secondary entity is authenticated if the received symbol sequence and the sent symbol sequence are identical and the primary entity is authenticated; and
a service content streamer arranged to set up a service content connection to the secondary entity.

The server may further comprise an authentication mechanism arranged to authenticate the primary entity, wherein the receiver is further arranged to receive an assigned identifier and a unique identifier of the subscription associated with the primary entity from the primary entity on a connection between the primary entity and the server, the mechanism further comprises a controller arranged to verify that the assigned identifier and the unique identifier of the user's subscription are matching. The authentication mechanism may further be arranged to perform an initial authentication process, the mechanism further comprising a generator arranged to generate random identifier, wherein the transmitter is further arranged to send the random identifier to the primary entity of the user to be used as assigned identifier, the receiver is further arranged to receive an assigned identifier via a messaging service from the primary entity, and the comparator is further arranged to compare the received assigned identifier and the random identifier, wherein the primary entity of the user is authenticated if the received assigned identifier and the random identifier are identical.

According to a sixth aspect of the prent invention, there is provided a computer program comprising program code as defined by independent claim 21.

### Brief description of drawings

Fig. 1 is a flow chart illustrating a method according to an embodiment of the present invention.
Fig. 2 is a flow chart illustrating a process for initial authentication of a primary entity according to an embodiment of the present invention.
Fig. 3 is a flow chart illustrating a process for a server authenticating a further entity according to an embodiment of the present invention.
Fig. 4 is a flow chart illustrating a process for a server authenticating a primary entity to the service provided by the server according to an embodiment of the present invention.
Fig. 5 is a flow chart illustrating a process for a server for initial authenticating of a primary entity to the service provided by the server according to an embodiment of the present invention.
Fig. 6 schematically illustrates a computer readable medium according an embodiment of the present invention.
Fig. 7 is a block diagram schematically illustrating a server according to an embodiment of the present invention.
Fig. 8 is a schematical transmission diagram illustrating an initial authentication of a primary entity.
Fig. 9 is a schematical transmission diagram illustrating an establishment of a service session from a further entity.
Fig. 10 is a schematical transmission diagram illustrating an establishment of a video conference between users via a server.

### Detailed description

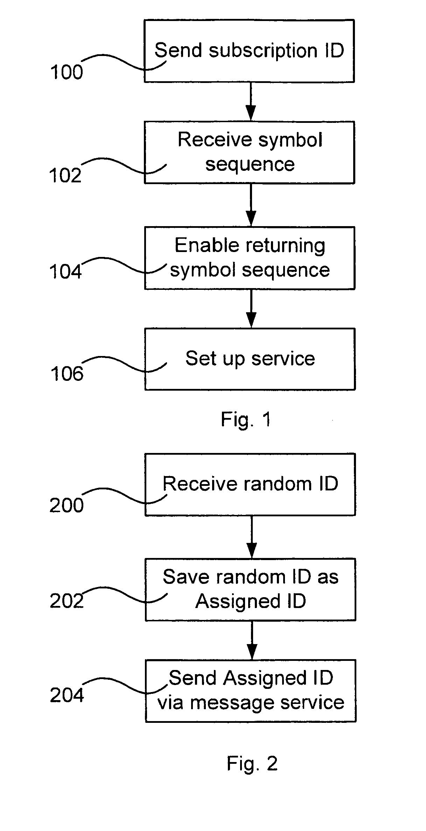

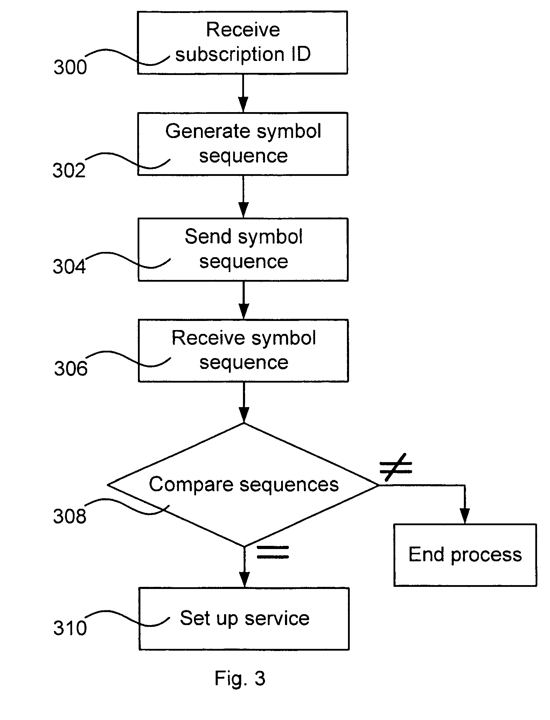

Fig. 1 is a flow chart illustrating a method according to an embodiment of the present invention. In a subscription identifier (ID) sending step 100, a unique ID of a user's subscription associated with a primary entity of the user is sent to a server providing a service, e.g. a video conference service. Together with the subscription ID sent to the server, there may also be a request identifying the service that the further entity wants to access, such as identification of an existing session, or identification of parties to involve in the service. The subscription ID and the optional request identifying the service that the further entity wants to access are preferably sent as a request message to the server via a communication network, such as the Internet. The primary entity can be a mobile phone, a fixed phone, or another communication apparatus having a subscription via which it is able to uniquely identify and thus authenticate the primary entity, for example as will be discussed below. The subscription ID can be a telephone number, an International Mobile Subscriber Identity (IMSI), a Mobile Subscriber Integrated Services Digital Network Number (MSISDN), or a Session Initiation Protocol (SIP) address. The subscription ID is sent by a further entity, e.g. a secondary, tertiary, etc. entity, which is an apparatus on which the service is to be performed and on behalf of the primary entity which is assumed to have access to the service provided by the server. The further entity receives a symbol sequence from the server in a symbol sequence reception step 102. The server preferably has generated a random symbol sequence that is sent to the further entity as a response to the request message. The symbol sequence will be used for pairing the further entity with the primary entity, i.e. authenticating that the further entity is authenticated to perform the service on behalf of the primary entity. This pairing is performed by the further entity enabling the primary entity to return the symbol sequence to the server in a symbol sequence returning enabling step 104. Enabling the primary entity to return the symbol sequence can be performed by the further entity displaying the symbol sequence, e.g. on a display screen, wherein the user types in the symbol sequence via a user interface of the primary entity and sends it to the server via an established communication link to the server. Alternatively, the symbol sequence can be transmitted from the further entity to the primary entity via short range communication, such as short range radio, e.g. Bluetooth, Wi-Fi, ZigBee, etc., infra-red communication, e.g. IrDA, or wired, e.g. USB, FireWire, etc. The user then confirms on the primary entity that the symbol sequence is to be sent to the server. If the server receives a symbol sequence that is identical to the one sent to the further entity, the server assumes that the user of the primary entity is in charge of the situation at the further entity, and considers the further entity as authenticated if the primary entity is authenticated, i.e. the primary entity and the further entity are paired, and will offer the service to the paired further entity. Thus, in a service setup step 106, the further entity sets up the service to be performed. The corresponding process of the server will be further described with reference to Fig. 3 below.

The discussion on the basic approach on letting a further entity perform a service provided by a server on behalf of a primary entity with reference to Fig. 1 has been on an abstract level. For facilitating understanding of the invention, an exemplary use case will now be given where references will be made to Fig. 1.

### Exemplary use case:

A user was supposed to attend a video conference at her office. Unfortunately, her taxi to the office got delayed, but she started attending the video conference using her mobile phone in the taxi. After a while she arrives to the office, still attending the video conference on her phone, where she switches on an Internet Protocol enabled TV (IPTV). She types her mobile phone number on the IPTV and sends it (step 100 in Fig. 1) to the server via the Internet. The IPTV receives a sequence "123456" (step 102 in Fig. 1) from the server. On the screen of the IPTV, the sequence "123456" is displayed (step 104 in Fig. 1) which she types in on her mobile phone in a way provided by a software associated with the video conference service. The software then provides the symbol sequence to the server via the established link (the phone already has the video conference link to the server), wherein the server offers the video conference to the IPTV, and the IPTV sets up the video conference. She then continues the video conference on the IPTV instead of on the mobile phone. Preferably, the video conference session on the mobile phone is now shut down, since it is redundant. It now may happen that the video conference takes longer time than expected. Her colleagues have booked the room where the IPTV is present, and she needs to continue on another place. She then switches on her portable media player which has communication capabilities via a wireless local area network of the office, types in her phone number on the media player, sends it to the server, and receives a symbol sequence to the media player. She then has the option to either type in and send the sequence by the IPTV or her mobile phone. In this case, she has turned her mobile phone off to avoid being disturbed during the video conference, and types the sequence via a user interface of the IPTV, and in a similar way as described above, the video conference is moved to the media player. In a similar way, the video conference may be moved to her personal computer when she reaches her room.

In this exemplary use case, the video conference started on the primary entity, the mobile phone, but the similar actions as moving the video conference to any of the further entities would apply for initiating a video conference from any of the further entities. If any of the further entities already is considered to be authenticated, e.g. when moving session from secondary entity to tertiary entity, and then moving the session back to the secondary entity, e.g. within a predetermined time, the secondary entity is considered to still be authenticated, and thus is no symbol sequence needed. Similarly, moving the session from any of the further entities to the primary entity, the primary entity is considered to be authenticated if it has an established connection with the server, and thus is no symbol sequence needed.

The service provided as example is a video conference, but the invention can be used for a broad range of services, and may for example include sharing of visible content, multi-player gaming sessions, technical development or planning tools, remote imaging, surveillance with operators at remote sites, and of course, video conferences.

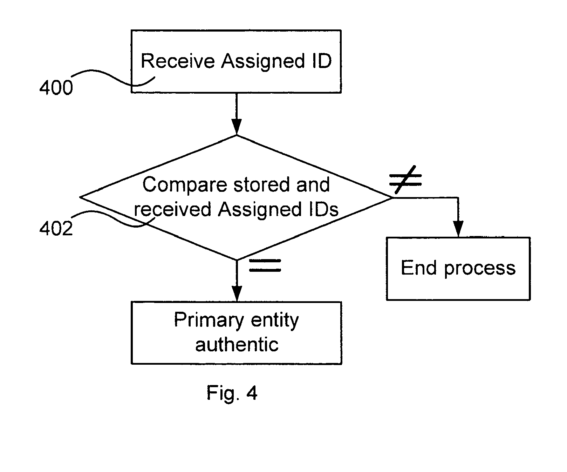

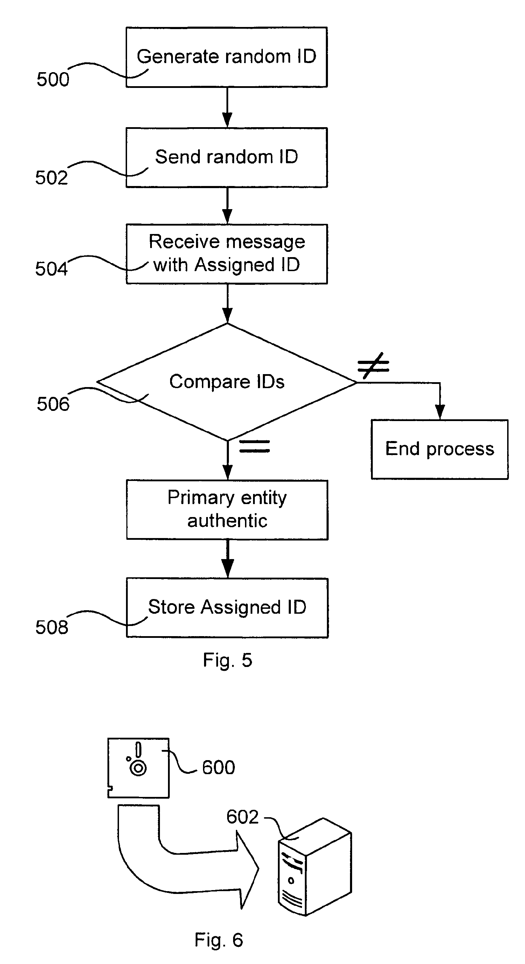

Fig. 2 is a flow chart illustrating a process for initial authentication of a primary entity according to an embodiment of the present invention. When the primary entity does not have an established and authorised connection to the server, as was assumed in the discussion with reference to Fig. 1, an authentication process comprising as will be described with reference to Fig. 4 can be used. For this process, there is an assumption that an initial authentication process has been performed for the primary entity, as will now be described with reference to Fig. 2 below. In an identifier (ID) reception step 200, a random ID generated at the server and sent to the primary entity is received by the primary entity. The primary entity saves the random ID as its Assigned ID in an Assigned ID saving step 202. The primary entity also sends the Assigned ID via a messaging service, e.g. short message service (SMS), to the server. When the server receives the returned random ID, now the Assigned ID, and it agrees with the sent random ID, the primary entity is considered as initially authenticated, which only has to be performed once. The process performed at the server will be further described with reference to Fig. 5. For subsequent authentication, the process that will be described with reference to Fig. 4 can be used.

Fig. 3 is a flow chart illustrating a process for a server authenticating a further entity according to an embodiment of the present invention. In a subscription ID reception step 300, the server receives a subscription ID associated with a subscription associated with a primary entity from a further entity. The server may then check if the subscription ID corresponds to an authenticated primary entity. If not, the server may request authentication by the primary entity, or just terminate the process. However, in this example, it is assumed that the subscription ID corresponds to an authenticated primary entity, i.e. a subscriber having access to the provided service. The server then generates a symbol sequence in a symbol generation step 302. The symbol sequence can be randomly generated. The length of the symbol sequence can depend on the required security level of the service. The symbol sequence is sent to the further entity in a symbol sequence sending step 304. The server then expects to get a confirmation from an authenticated entity, e.g. the primary entity, or another further entity that has been previously authenticated. Thus, in a symbol sequence reception step 306, a symbol sequence is received from an authenticated entity. If the symbol sequence is received from a non-authenticated entity, the process can be terminated. The received symbol sequence is compared with the generated symbol sequence in a sequence comparison step 308. If the sequences do not equal, the process is terminated. If the sequences are equal, the service is provided to the further entity in a service set-up step 310.

Fig. 4 is a flow chart illustrating a process for a server authenticating a primary entity to the service provided by the server according to an embodiment of the present invention. As discussed with reference to Fig. 2, an initial authentication process is assumed to already have been processed, which needs to be done only once. For subsequent authentications, the process that will be described with reference to Fig. 4 can be sufficient for authentication of the primary entity. The initial authentication do not have to be the one discussed with reference to Fig. 2. The primary entity may have acquired its Assigned ID in another secure way. For the process discussed with reference to Fig. 4, it is assumed that some communication is established between the primary entity and the server such that the primary entity can send its Assigned ID to the server. Thus, the server receives the Assigned ID of the primary entity in an Assigned ID reception step 400. The received Assigned ID is then compared with a stored Assigned ID for the primary entity in an Assigned ID comparison step 402. The stored Assigned ID is preferably stored in the server at an initial authentication. If the received Assigned ID and the stored Assigned ID do not equal, the process is terminated. If the received Assigned ID and the stored Assigned ID are equal, the primary entity is considered authenticated.

Fig. 5 is a flow chart illustrating a process for a server for initial authenticating of a primary entity to the service provided by the server according to an embodiment of the present invention. It is assumed that some connection is established between the primary entity and the server such that they are able to communicate. The server generates a random ID in a random ID generation step 500. The generated random ID is sent to the primary entity in a random ID sending step 502. The sent random ID is to be used as an Assigned ID by the primary entity, i.e. it will be used for subsequent authentication of the primary entity. Therefore, the server requires to receive a confirmation from the primary entity. This is received via a second communication channel, a messaging service, e.g. short message service, in a message reception step 504. This improves the security. The message comprises the Assigned ID. The received Assigned ID is compared with the generated random ID in an ID comparison step 506. If the IDs are not equal, the process terminates. If the IDs are equal, the primary entity is considered authentic. The Assigned ID for the primary entity is stored by the server in an Assigned ID storage step 508.

The methods and processes described above are particularly suitable for being performed under control of a computer or processor, which is commonly present in the types of entities in question, and in the server. Thus, the methods and processes can be implemented as program code forming one or more computer programs, which when downloaded into the processors or computers of the entities or server, respectively, arranges for performing the methods and processes. The program code can be stored on a computer readable medium 600, as schematically depicted in Fig. 6, which when downloaded and executed by a processor or computer 602 is arranged to cause the processor or computer to perform the actions described with reference to Figs 1 to 5.

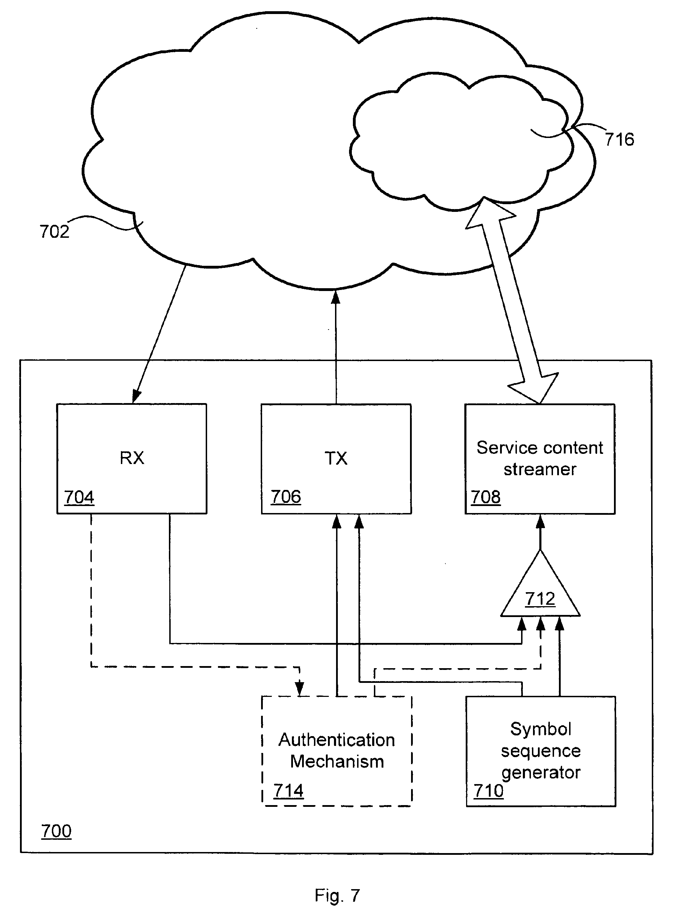

Fig. 7 is a block diagram schematically illustrating a server 700 according to an embodiment of the present invention. The server is connected to one or more communication networks 702, such as the Internet. The server 700 comprises a receiver 704, a transmitter 706, a service content streamer 708, a symbol sequence generator 710, and a comparator 712. Optionally, the server comprises an authentication mechanism 714. As is inherent for a server, the server 700 comprises a processor and memory, which is not shown in Fig. 7 not to obscure the particular functionality of the server according to the present invention.

The server 700 is arranged for providing a service to entities via the one or more communication networks 702, and in particular to further entities of a user having a primary entity which is associated with a subscription. The receiver 704 is arranged to receive a unique identifier of the user's subscription from a further entity via the communication network 702. The symbol sequence generator 710 is arranged to generate a symbol sequence. The transmitter 706 is arranged to send the symbol sequence to the further entity via the communication network 702. The receiver 704 is also arranged to receive a symbol sequence from the further entity. The generated symbol sequence is provided to the comparator 712 by the symbol sequence generator, as well as the received symbol sequence is provided to the comparator 712 by the receiver 704. The comparator 712 compares if the symbol sequences are equal, and if they are, the comparator 712 provides an enable signal to the service content streamer 708, which provides the service to the further entity via the communication network 702, e.g. on a service session 716 on the network. The service session can for example be a video conference with two or more users connected with their preferred entities, as has been discussed above with reference to Figs 1 to 5 and to the given exemplary use case.

The optional authentication mechanism 714 is arranged to authenticate the primary entity if that is necessary. In that case, the receiver 704 receives an Assigned ID and a unique identifier of the subscription associated with the primary entity from the primary entity via the communication network 702. The optional authentication mechanism 714 comprises a controller arranged to verify that the Assigned ID and the unique ID of the subscription are matching. This can be performed by checking stored Assigned IDs and their corresponding subscription ID in a database of the server.

The optional authentication mechanism 714 can further be arranged to perform an initial authentication process according to what has been discussed with reference to Figs 2 and 5 above. Thus, the authentication mechanism 714 comprises a random identifier generator generating a random identifier. The random identifier is provided to the transmitter 706 which sends the random identifier to the primary entity via the communication network 702. The random identifier is thus to be used as an Assigned ID of the primary entity. The receiver 704, or another receiver, receives an Assigned ID via a messaging service from the primary entity. The messaging service may use another communication network. The controller of the authentication mechanism 714 compares the received Assigned ID with the provided random identifier, wherein identical Assigned ID and provided random identifier confirms that the primary entity is initially authenticated. The Assigned ID is stored in the memory of the server, together with the unique identifier of the subscription, for example in a database structure.

The user entities can for example be a mobile phone, fixed phone, Internet Protocol (IP) enabled telephone, media player with communication capabilities, IP enabled TV, set-top box with uplink capabilities, personal computer, palmtop computer, personal digital assistant, etc. The primary entity requires an association with a subscription, which can be authenticated by the service provider providing the subscription, for example by a subscriber identity module (SIM) applied in the entity. For example, the primary entity can be a mobile phone having a mobile phone subscription through which the entity can be authenticated by the server providing the service according to the invention. Another example is a set-top box having a subscription to pay-TV channels. Any of the entities may be a further entity to a primary entity, as no SIM or authenticated subscription is needed, since the further entity is dynamically authenticated according to the invention as described above. For providing the functionality of the entities to be able to perform the actions of the entities described above with reference to Figs 1 and 2, the entity, i.e. the primary entity or any of the further entities, is preferably provided with software implementing the methods and processes of the invention to be performed by the entity. This software can be native software provided by the manufacturer of the device, a client software downloaded to the entity, a script provided at connection to the server, etc.

The service provided with the server can also, besides its primary services, comprise contact management services, such as shared phone book, presence information service, etc. The server can also provide scripts to entities to enable the dynamic entity authentication.

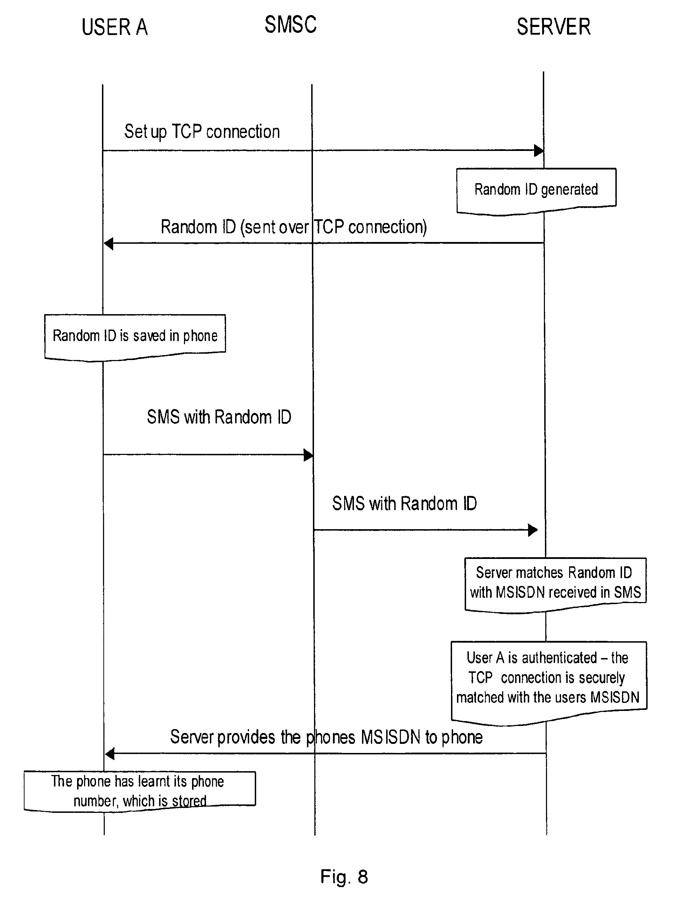

For further understanding how the invention can work in practice, a few further use cases will now be given with reference to Figs 8 to 10, which are schematical transmission diagrams.

Fig. 8 illustrates an initial authentication of a primary entity, here a mobile phone, to a server providing the service in question. User A sets up a connection to the server, and the server generates a random ID, which is sent back to User A over the established connection. The random ID is saved in the phone as an Assigned ID. To confirm and authenticate, User A sends an SMS comprising the random ID via a Short Message Service Center (SMSC) associated with the mobile phone subscription of User A. The SMSC provides the SMS to the server, which from the SMS can determine the Mobile Subscriber Integrated Services Digital Network Number (MSISDN) and check the random ID. Thus, User A is authenticated and the connection is considered securely matched with User A's MSISDN. The server can then provide the MSISDN to the phone of User A such that the phone can store its MSISDN, if not already known by the phone.

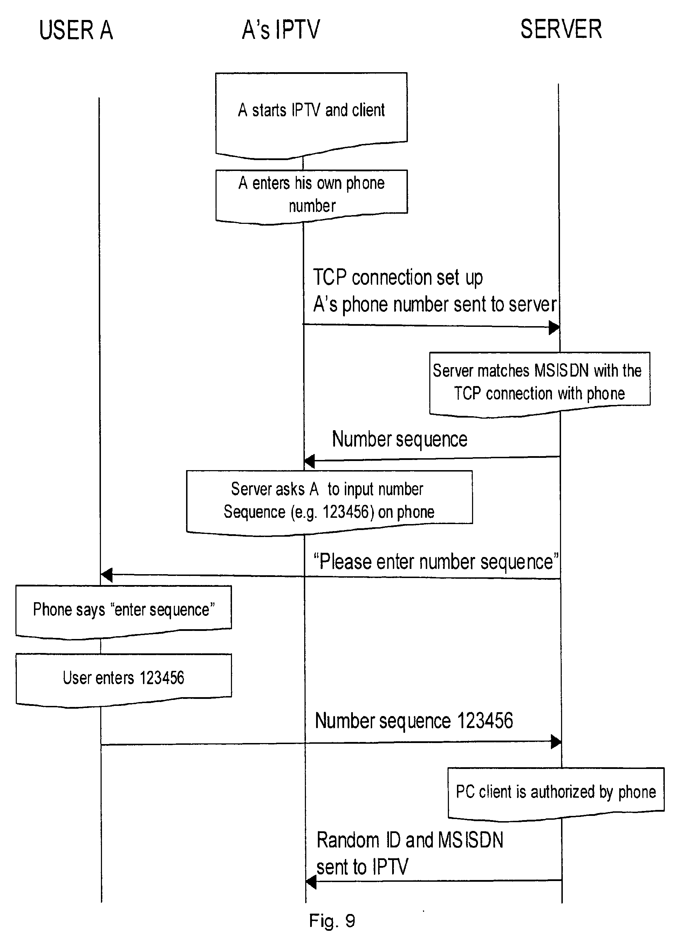

Fig. 9 illustrates an establishment of a service session from a further entity, here an IP enabled TV (IPTV). User A starts his IPTV which has a client arranged to interact with the server. User A enters his phone number on a user interface of the IPTV, whereby the IPTV by its client sets up a connection to the server and provides the phone number to the server via the connection. The server checks if the phone number and checks if there is a connection to the associated phone. A number sequence is provided to the IPTV, which for example is displayed by the IPTV. The server also sends a request to the phone to enter a number sequence. User A enters the number sequence displayed on the IPTV on his phone, and the sequence is sent from the phone to the server. The server now knows that the IPTV is authorized, and sends necessary information to the IPTV.

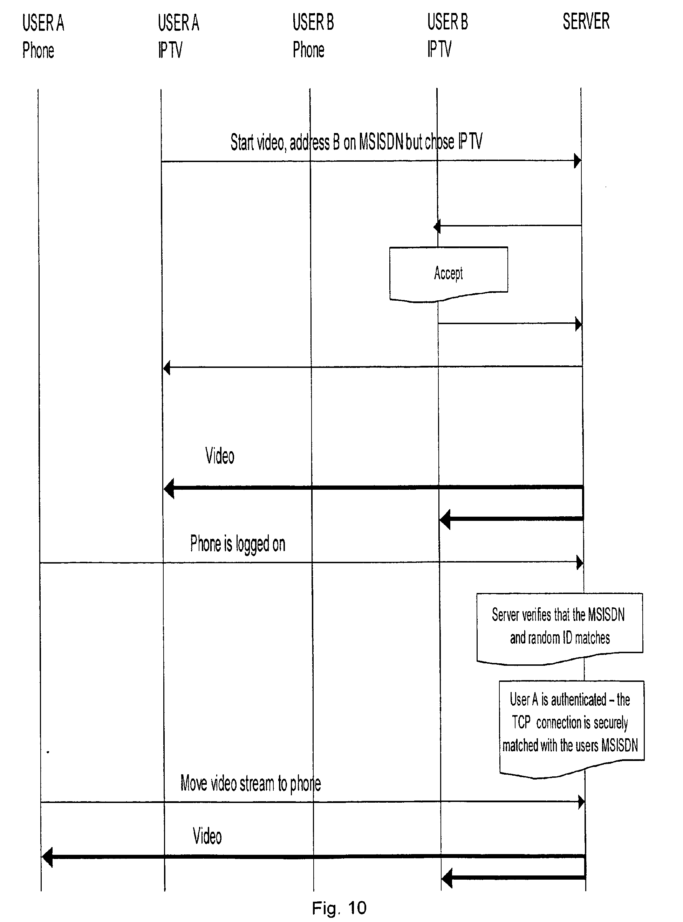

Fig. 10 illustrates an establishment of a video conference between User A and User B via a server. User A has started his IPTV, for example as demonstrated with reference to Fig. 9. User A sends a request for video conference with User B to the server. The request comprises User B's phone number, but may also comprise a request for setting up the video conference to User B's IPTV. User A might be aware of the possibility for this thanks to a presence information service where he is able to see that User B's IPTV is logged on to the server. Thus, the server sends a request for video conference to User B's IPTV, from which the server receives an accept in return. This is indicated to User A, and a video conference session is set up to the IPTV of User A and the IPTV of User B. After a while, User A might want to leave the location of the IPTV, and switches on his mobile phone and logs on to the server by the mobile phone. This is performed by sending the MSISDN and the Assigned ID, which for example is acquired as discussed with reference to Fig. 8, to the server, which verifies the MSISDN and the Assigned ID. If it is verified at the server that the received MSISDN and the Assigned ID matches, User A is authenticated. User A can then send a request to the server that the video conference session should be transmitted to the mobile phone. Thus, the video conference session is set up to the mobile phone of User A and the IPTV of User B.

## Claims

1. A method of establishing a service session via a server with a secondary entity of a first user having a primary entity associated with a subscription, the method comprising
sending (100) a unique identifier of the first user's subscription from the secondary entity to the server; and
setting up (106) the service session on the secondary entity,
the method being **characterised by**
receiving (102) from the server a symbol sequence at the secondary entity; and
enabling (104) sending of the symbol sequence from the primary entity to the server such that the server is able to match that the received symbol sequence and the sent symbol sequence are identical, wherein a match confirms that the secondary entity is authenticated if the primary entity is authenticated.

2. The method according to claim 1, wherein the enabling comprises
displaying the received symbol sequence by the secondary entity; and
enabling input of the symbol sequence through a user interface of the primary entity.

3. The method according to claim 1 or 2, wherein authentication of the primary entity comprises
sending an assigned identifier and a unique identifier of the subscription associated with the primary entity from the primary entity on a connection between the primary entity and the server such that the server is able to verify that the assigned identifier and the unique identifier of the user's phone subscription are matching.

4. The method according to claim 3, wherein the authentication of the primary entity further comprises an initial authentication process, the process comprising
receiving (200) a random identifier from the server to be used as assigned identifier;
sending (204) the assigned identifier via a messaging service to the server such that the server is able to match that the received assigned identifier and the random identifier are identical, wherein a match confirms that the primary entity is authenticated.

5. The method according to any of claims 1 to 4, wherein the service session is an established service session on the primary entity.

6. The method according to any of claims 1 to 4, wherein the service session is initiated by the secondary entity.

7. The method according to any of claims 1 to 6, further comprising
sending a notification from the primary entity to the server that the service session should be moved to the primary entity; and
setting up the service session on the primary entity.

8. The method according to any of claims 1 to 7, further comprising sending a unique identifier of the first user's subscription from a tertiary entity to the server;
receiving from the server a symbol sequence to the tertiary entity;
sending the symbol sequence from the primary or secondary entity to the server such that the server is able to match that the received symbol sequence and the sent symbol sequence are identical, wherein a match confirms that the tertiary entity is authenticated the entity sending the symbol sequence is authenticated; and
setting up the service session on the tertiary entity.

9. The method according to claim 8, further comprising
sending a notification to the server that the service session should be moved to the primary entity; and
setting up the service session on the primary entity.

10. The method according to claim 8 or 9, further comprising
displaying the received symbol sequence by the tertiary entity; and
enabling input of the symbol sequence through a user interface of the primary or secondary entity.

11. A method of establishing a service session, on a secondary entity of a first user having a primary entity associated with a subscription, by a server, the method comprising
receiving (300) a unique identifier of the first user's subscription from the secondary entity; and
setting up (310) the service session to the secondary entity,
the method being **characterised by**
generating (302) a symbol sequence;
sending (304) the symbol sequence to the secondary entity;
receiving (306) a symbol sequence from the primary entity; and
matching (308) that the received symbol sequence and the sent symbol sequence are identical, wherein a match confirms that the secondary entity is authenticated if the primary entity is authenticated.

12. The method according to claim 11, wherein authentication of the primary entity comprises
receiving an assigned identifier and a unique identifier of the subscription associated with the primary entity from the primary entity on a connection between the primary entity and the server;
verifying that the assigned identifier and the unique identifier of the user's subscription are matching.

13. The method according to claim 12, wherein the authentication further comprises an initial authentication process, the process comprising
generating a random identifier;
sending the random identifier to the entity of the user to be used as assigned identifier;
receiving an assigned identifier via a messaging service from the primary entity;
matching that the received assigned identifier and the random identifier are identical, wherein a match confirms that the primary entity of the user is authenticated.

14. The method according to any of claims 11 to 13, wherein the service session is an established service session on the primary entity.

15. The method according to any of claims 11 to 13, wherein the service session is initiated by the secondary entity.

16. The method according to any of claims 11 to 15, further comprising
receiving a notification from the primary entity that the service session should be moved to the primary entity; and
setting up the service session on the primary entity.

17. The method according to any of claims 11 to 16, further comprising
receiving a unique identifier of the first user's subscription from a tertiary entity;
generating a second symbol sequence;
sending the second symbol sequence to the tertiary entity;
receiving a symbol sequence from the primary or secondary entity to the server such that the server is able to match that the received symbol sequence and the sent secondary symbol sequence are identical, wherein a match confirms that the tertiary entity is authenticated if the entity sending the symbol sequence is authenticated; and
setting up the service session on the tertiary entity.

18. The method according to claim 17, further comprising
receiving a notification from the primary entity that the service session should be moved to the primary entity; and
setting up the service session on the primary entity.

19. A computer readable medium comprising program code, which when executed by a processor is arranged to cause the processor to perform
reception of a unique identifier of the first user's subscription from the secondary entity; and
setting up a service session to the secondary entity,
the performing being **characterised by**
generation of a symbol sequence;
sending of the symbol sequence to the secondary entity;
reception of a symbol sequence from the primary entity; and
matching that the received symbol sequence and the sent symbol sequence are identical, wherein a match confirms that the secondary entity is authenticated if the primary entity is authenticated.

20. A computer readable medium comprising program code, which when executed by a processor is arranged to cause the processor to perform
sending of a unique identifier of the first user's subscription from the secondary entity to the server; and
setting up the service session on the secondary entity,
the performing being **characterised by**
reception from the server a symbol sequence at the secondary entity; and
enabling of sending of the symbol sequence from the primary entity to the server such that the server is able to match that the received symbol sequence and the sent symbol sequence are identical, wherein a match confirms that the secondary entity is authenticated if the primary entity is authenticated.

21. A computer program comprising program code, which when executed by a processor is arranged to cause the processor to perform the method according to any of claims 1 to 18.

22. A server (700) arranged for establishing a service session to a secondary entity of a first user having a primary entity associated with a subscription, the server comprising
a receiver (704) arranged to receive a unique identifier of the first user's subscription from the secondary entity; and
a service content streamer (708) arranged to set up a service content connection to the secondary entity,
the server (700) being **characterised by**
a symbol sequence generator (710) arranged to generate a symbol sequence;
a transmitter (706) arranged to send the symbol sequence to the secondary entity, wherein the receiver (704) is further arranged to receive a symbol sequence from the primary entity; and
a comparator (712) arranged to compare the received symbol sequence and the sent symbol sequence, wherein the secondary entity is authenticated if the received symbol sequence and the sent symbol sequence are identical and the primary entity is authenticated.

23. The server (700) according to claim 22, further comprising an authentication mechanism (714) arranged to authenticate the primary entity, wherein the receiver (704) is further arranged to receive an assigned identifier and a unique identifier of the subscription associated with the primary entity from the primary entity on a connection between the primary entity and the server (700), the mechanism (714) further comprises a controller arranged to verify that the assigned identifier and the unique identifier of the user's subscription are matching.

24. The server (700) according to claim 23, wherein the authentication mechanism (714) further is arranged to perform an initial authentication process, the mechanism (714) further comprising a generator arranged to generate random identifier, wherein the transmitter (706) is further arranged to send the random identifier to the primary entity of the user to be used as assigned identifier, the receiver (704) is further arranged to receive an assigned identifier via a messaging service from the primary entity, and the comparator (712) is further arranged to compare the received assigned identifier and the random identifier, wherein the primary entity of the user is authenticated if the received assigned identifier and the random identifier are identical.

## Patentansprüche

1. Verfahren zum Einrichten einer Dienstsitzung über einen Server mit einer Sekundäreinheit eines ersten Benutzers, welcher eine Primäreinheit besitzt, welcher eine Dienstteilnahme zugeordnet ist, wobei das Verfahren umfasst
Senden (100) eines eindeutigen Identifizierungszeichens der Dienstteilnahme des ersten Benutzers von der Sekundäreinheit zu dem Server; und
Aufbauen (106) der Dienstsitzung auf der Sekundäreinheit,
wobei das Verfahren **gekennzeichnet ist durch**
Empfangen (102) einer Symbolfolge von dem Server an der Sekundäreinheit; und
Freigeben (104) eines Sendens der Symbolfolge von der Primäreinheit zu dem Server derart, dass der Server in der Lage ist, abzugleichen, dass die empfangene Symbolfolge und die gesendete Symbolfolge identisch sind, wobei ein Abgleichen bestätigt, dass die Sekundäreinheit authentifiziert ist, wenn die Primäreinheit authentifiziert ist.

2. Verfahren nach Anspruch 1, wobei das Freigeben umfasst:
Anzeigen der empfangenen Symbolfolge durch die Sekundäreinheit; und
Freigeben einer Eingabe der Symbolfolge durch eine Benutzerschnittstelle der Primäreinheit.

3. Verfahren nach Anspruch 1 oder 2, wobei ein Authentifizieren der Primäreinheit umfasst
Senden eines zugeordneten Identifizierungszeichens und eines eindeutigen Identifizierungszeichens der Dienstteilnahme, welche der Primäreinheit zugeordnet ist, von der Primäreinheit auf einer Verbindung zwischen der Primäreinheit und dem Server derart, dass der Server in der Lage ist, zu verifizieren, dass das zugeordnete Identifizierungszeichen und das eindeutige Identifizierungszeichen der Telefondienstteilnahme des Benutzers zusammen passen.

4. Verfahren nach Anspruch 3, wobei das Authentifizieren der Primäreinheit ferner einen Einleitungsidentifizierungsvorgang umfasst, wobei der Vorgang umfasst
Empfangen (200) eines zufälligen Identifizierungszeichens von dem Server, welches als zugeordnetes Identifizierungszeichen zu verwenden ist;
Senden (204) des zugeordneten Identifizierungszeichens über einen Nachrichtendienst zu dem Server derart, dass der Server in der Lage ist, abzugleichen, dass das empfangene zugeordnete Identifizierungszeichen und das zufällige Identifizierungszeichen identisch sind, wobei ein Abgleichen bestätigt, dass die Primäreinheit authentifiziert ist.

5. Verfahren nach einem der Ansprüche 1-4, wobei die Dienstsitzung eine eingerichtete Dienstsitzung auf der Primäreinheit ist.

6. Verfahren nach einem der Ansprüche 1-4, wobei die Dienstsitzung durch die Sekundäreinheit eingeleitet wird.

7. Verfahren nach einem der Ansprüche 1-6, ferner umfassend
Senden einer Meldung von der Primäreinheit zu dem Server, dass die Dienstsitzung zu der Primäreinheit bewegt werden soll; und
Aufbauen der Dienstsitzung auf der Primäreinheit.

8. Verfahren nach einem der Ansprüche 1-7, ferner umfassend
Senden eines eindeutigen Identifizierungszeichens der Dienstteilnahme des ersten Benutzers von einer Tertiäreinheit zu dem Server;
Empfangen einer Symbolfolge für die Tertiäreinheit von dem Server;
Senden der Symbolfolge von der Primär- oder Sekundäreinheit zu dem Server derart, dass der Server in der Lage ist, abzugleichen, dass die empfangene Symbolfolge und die gesendete Symbolfolge identisch sind, wobei ein Abgleichen bestätigt, dass die Tertiäreinheit authentifiziert ist, wenn die Einheit, welche die Symbolfolge sendet, authentifiziert ist; und
Aufbauen der Dienstsitzung auf der Tertiäreinheit.

9. Verfahren nach Anspruch 8, ferner umfassend:
Senden einer Meldung zu dem Server, dass die Dienstsitzung zu der Primäreinheit bewegt werden soll; und
Aufbauen der Dienstsitzung auf der Primäreinheit.

10. Verfahren nach Anspruch 8 oder 9, ferner umfassend
Anzeigen der empfangenen Symbolfolge durch die Tertiäreinheit; und
Freigeben einer Eingabe der Symbolfolge durch eine Benutzerschnittstelle der Primär- oder Sekundäreinheit.

11. Verfahren zum Einrichten einer Dienstsitzung auf einer Sekundäreinheit eines ersten Benutzers, welcher eine Primäreinheit besitzt, welcher einer Dienstteilnahme zugeordnet ist, durch einen Server, wobei das Verfahren umfasst:
Empfangen (300) eines eindeutigen Identifizierungszeichens der Dienstteilnahme des ersten Benutzers von der Sekundäreinheit; und
Aufbauen (310) der Dienstsitzung für die Sekundäreinheit,
wobei das Verfahren **gekennzeichnet ist durch** Erzeugen (302) einer Symbolfolge;
Senden (304) der Symbolfolge zu der Sekundäreinheit;
Empfangen (306) einer Symbolfolge von der Primäreinheit; und
Abgleichen (308), dass die empfangene Symbolfolge und die gesendete Symbolfolge identisch sind, wobei ein Abgleich bestätigt, dass die Sekundäreinheit authentifiziert ist, wenn die Primäreinheit authentifiziert ist.

12. Verfahren nach Anspruch 11, wobei eine Authentifizierung der Primäreinheit umfasst
Empfangen eines zugeordneten Identifizierungszeichens und eines eindeutigen Identifizierungszeichens der Dienstteilnahme, welche der Primäreinheit zugeordnet ist, von der Primäreinheit auf einer Verbindung zwischen der Primäreinheit und dem Server;
Verifizieren, dass das zugeordnete Identifizierungszeichen und das eindeutige Identifizierungszeichen der Dienstteilnahme des Benutzers zusammen passen.

13. Verfahren nach Anspruch 12, wobei das Authentifizieren ferner einen Einleitungsauthentifizierungsvorgang umfasst, wobei der Vorgang umfasst
Erzeugen eines zufälligen Identifizierungszeichens;
Senden des zufälligen Identifizierungszeichens zu der Einheit des Benutzers, um als zugeordnetes Identifizierungszeichen benutzt zu werden;
Empfangen eines zugeordneten Identifizierungszeichens über einen Nachrichtendienst von der Primäreinheit;
Abgleichen, dass das empfangene zugeordnete Identifizierungszeichen und das zufällige Identifizierungszeichen identisch sind, wobei ein Abgleichen bestätigt, dass die Primäreinheit des Benutzers authentifiziert ist.

14. Verfahren nach einem der Ansprüche 11-13, wobei die Dienstsitzung eine eingerichtete Dienstsitzung auf der Primäreinheit ist.

15. Verfahren nach einem der Ansprüche 11-13, wobei die Dienstsitzung durch die Sekundäreinheit eingeleitet wird.

16. Verfahren nach einem der Ansprüche 11-15, ferner umfassend
Empfangen einer Meldung von der Primäreinheit, dass die Dienstsitzung zu der Primäreinheit bewegt werden soll; und
Aufbauen der Dienstsitzung auf der Primäreinheit.

17. Verfahren nach einem der Ansprüche 11-16, ferner umfassend
Empfangen eines eindeutigen Identifizierungszeichens der Dienstteilnahme des ersten Benutzers von einer Tertiäreinheit;
Erzeugen einer zweiten Symbolfolge;
Senden der zweiten Symbolfolge zu der Tertiäreinheit;
Empfangen einer Symbolfolge von der Primär- oder Sekundäreinheit an dem Server derart, dass der Server in der Lage ist, abzugleichen, dass die empfangene Symbolfolge und die gesendete zweite Symbolfolge identisch sind, wobei ein Abgleichen bestätigt, dass die Tertiäreinheit authentifiziert ist, wenn die Einheit, welche die Symbolfolge sendet, authentifiziert ist; und
Aufbauen der Dienstsitzung auf der Tertiäreinheit.

18. Verfahren nach Anspruch 17, ferner umfassend
Empfangen einer Meldung von der Primäreinheit, dass die Dienstsitzung zu der Primäreinheit bewegt werden soll; und
Aufbauen der Dienstsitzung auf der Primäreinheit.

19. Computerlesbares Medium umfassend einen Programmcode, welcher, wenn er von einem Prozessor ausgeführt wird, ausgestaltet ist, zu bewirken, dass der Prozessor ausführt:
Empfangen eines eindeutigen Identifizierungszeichens der Dienstteilnahme des ersten Benutzers von der Sekundäreinheit; und
Aufbauen einer Dienstsitzung für die Sekundäreinheit;
wobei das Ausführen **gekennzeichnet ist durch** Erzeugen einer Symbolfolge;
Senden der Symbolfolge zu der Sekundäreinheit;
Empfangen einer Symbolfolge von der Primäreinheit; und
Abgleichen, dass die empfangene Symbolfolge und die gesendete Symbolfolge identisch sind, wobei ein Abgleich bestätigt, dass die Sekundäreinheit authentifiziert ist, wenn die Primäreinheit authentifiziert ist.

20. Computerlesbares Medium umfassend einen Programmcode, welcher, wenn er von einem Prozessor ausgeführt wird, ausgestaltet ist, zu bewirken, dass der Prozessor ausführt:
Senden eines eindeutigen Identifizierungszeichens einer Dienstteilnahme des ersten Benutzers von der Sekundäreinheit zu dem Server; und
Aufbauen der Dienstsitzung auf der Sekundäreinheit,
wobei das Ausführen **gekennzeichnet ist durch**
Empfangen einer Symbolfolge von dem Server an der Sekundäreinheit; und
Freigeben eines Sendens der Symbolfolge von der Primäreinheit zu dem Server derart, dass der Server in der Lage ist, abzugleichen, dass die empfangene Symbolfolge und die gesendete Symbolfolge identisch sind, wobei ein Abgleichen bestätigt, dass die Sekundäreinheit authentifiziert ist, wenn die Primäreinheit authentifiziert ist.

21. Computerprogramm umfassend einen Programmcode, welcher, wenn er von einem Prozessor ausgeführt wird, ausgestaltet ist, zu bewirken, dass der Prozessor das Verfahren nach einem der Ansprüche 1-18 ausführt.

22. Server (700), welcher zum Einrichten einer Dienstsitzung für eine Sekundäreinheit eines ersten Benutzers, welcher eine Primäreinheit besitzt, welcher eine Dienstteilnahme zugeordnet ist, ausgestaltet ist, wobei der Server umfasst
einen Empfänger (704), welcher ausgestaltet ist, ein eindeutiges Identifizierungszeichen der Dienstteilnahme des ersten Benutzers von der Sekundäreinheit zu empfangen; und
eine Dienstinhaltstreamingvorrichtung (708), welche ausgestaltet ist, eine Dienstinhaltverbindung zu der Sekundäreinheit aufzubauen,
wobei der Server (700) **gekennzeichnet ist durch**
einen Symbolfolgengenerator (710), welcher ausgestaltet ist, eine Symbolfolge zu erzeugen;
einen Sender (706), welcher ausgestaltet ist, die Symbolfolge zu der Sekundäreinheit zu senden, wobei der Empfänger (704) ferner ausgestaltet ist, eine Symbolfolge von der Primäreinheit zu empfangen; und
einen Vergleicher (712), welcher ausgestaltet ist, die empfangene Symbolfolge und die gesendete Symbolfolge zu vergleichen, wobei die Sekundäreinheit authentifiziert ist, wenn die empfangene Symbolfolge und die gesendete Symbolfolge identisch sind und die Primäreinheit authentifiziert ist.

23. Server (700) nach Anspruch 22, ferner umfassend einen Authentifizierungsmechanismus (714), welcher ausgestaltet ist, die Primäreinheit zu authentifizieren, wobei der Empfänger (704) ferner ausgestaltet ist, ein zugeordnetes Identifizierungszeichen und ein eindeutiges Identifizierungszeichen der Dienstteilnahme, welche der Primäreinheit zugeordnet ist, von der Primäreinheit auf einer Verbindung zwischen der Primäreinheit und dem Server (700) zu empfangen, wobei der Mechanismus (714) ferner eine Steuerung umfasst, welche ausgestaltet ist, zu verifizieren, dass das zugeordnete Identifizierungszeichen und das eindeutige Identifizierungszeichen der Dienstteilnahme des Benutzers zusammenpassen.

24. Server (700) nach Anspruch 23, wobei der Authentifizierungsmechanismus (714) ferner ausgestaltet ist, einen Einleitungsauthentifizierungsvorgang auszuführen, wobei der Mechanismus (714) ferner einen Generator umfasst, welcher ausgestaltet ist, ein zufälliges Identifizierungszeichen zu erzeugen, wobei der Sender (706) ferner ausgestaltet ist, das zufällige Identifizierungszeichen zu der Primäreinheit des Benutzers zu senden, um als zugeordnetes Identifizierungszeichen verwendet zu werden, wobei der Empfänger (704) ferner ausgestaltet ist, ein zugeordnetes Identifizierungszeichen über einen Nachrichtendienst von der Primäreinheit zu empfangen, und wobei der Vergleicher (712) ferner ausgestaltet ist, das empfangene zugeordnete Identifizierungszeichen und das zufällige Identifizierungszeichen zu vergleichen, wobei die Primäreinheit des Benutzers authentifiziert ist, wenn das empfangene zugeordnete Identifizierungszeichen und das zufällige Identifizierungszeichen identisch sind.

## Revendications

1. Procédé d'établissement d'une session de service à travers un serveur avec une unité secondaire d'un premier utilisateur ayant une entité primaire associée à un abonnement, le procédé comprenant le fait
d'envoyer (100) un identifiant unique de l'abonnement du premier utilisateur de l'entité secondaire au serveur ; et
d'établir (106) la session de service sur l'entité secondaire,
le procédé étant **caractérisé par** le fait
de recevoir (102) du serveur une séquence de symboles au niveau de l'entité secondaire ; et
de permettre (104) l'envoi de la séquence de symboles de l'entité primaire au serveur de telle sorte que le serveur soit capable de relever une concordance selon laquelle la séquence de symboles reçue et la séquence de symboles envoyée sont identiques, dans lequel une concordance confirme que l'entité secondaire est authentifiée si l'entité primaire est authentifiée.

2. Procédé selon la revendication 1, dans lequel la permission comprend le fait
d'afficher la séquence de symboles reçue par l'entité secondaire ; et
de permettre la saisie de la séquence de symboles au moyen d'une interface utilisateur de l'entité primaire.

3. Procédé selon la revendication 1 ou 2, dans lequel une authentification de l'entité primaire comprend le fait
d'envoyer un identifiant affecté et un identifiant unique de l'abonnement associé à l'entité primaire à partir de l'entité primaire sur une connexion entre l'entité primaire et le serveur de telle sorte que le serveur soit capable de vérifier que l'identifiant affecté et l'identifiant unique de l'abonnement téléphonique de l'utilisateur concordent.

4. Procédé selon la revendication 3, dans lequel l'authentification de l'entité primaire comprend en outre un processus d'authentification initiale, le processus comprenant le fait
de recevoir (200) un identifiant aléatoire du serveur qui doit être utilisé en tant qu'identifiant affecté ;
d'envoyer (204) l'identifiant affecté au moyen d'un service de messagerie au serveur de telle sorte que le serveur puisse relever une concordance selon laquelle l'identifiant affecté reçu et l'identifiant aléatoire sont identiques, dans lequel une concordance confirme que l'entité primaire est authentifiée.

5. Procédé selon l'une des revendications 1 à 4, dans lequel la session de service est une session de service établie sur l'entité primaire.

6. Procédé selon l'une des revendications 1 à 4, dans lequel la session de service est initiée par l'entité secondaire.

7. Procédé selon l'une des revendications 1 à 6, comprenant en outre le fait
d'envoyer une notification de l'entité primaire au serveur indiquant que la session de service doit être déplacée vers l'entité primaire ; et
d'établir la session de service sur l'entité primaire.

8. Procédé selon l'une des revendications 1 à 7, comprenant en outre le fait
d'envoyer un identifiant unique de l'abonnement du premier utilisateur d'une entité tertiaire au serveur ;
de recevoir du serveur une séquence de symboles à l'entité tertiaire ;
d'envoyer la séquence de symboles de l'entité primaire ou secondaire au serveur de telle sorte que le serveur soit capable de relever une concordance selon laquelle la séquence de symboles reçue et la séquence de symboles envoyée sont identiques, dans lequel une concordance confirme que l'entité tertiaire est authentifiée si l'entité envoyant la séquence de symboles est authentifiée ; et
d'établir la session de service sur l'entité tertiaire.

9. Procédé selon la revendication 8, comprenant en outre le fait
d'envoyer une notification au serveur indiquant que la session de service doit être déplacée vers l'entité primaire ; et
d'établir la session de service sur l'entité primaire.

10. Procédé selon la revendication 8 ou 9, comprenant en outre le fait
d'afficher la séquence de symboles reçue par l'entité tertiaire ; et
de permettre la saisie de la séquence de symboles au moyen d'une interface utilisateur de l'entité primaire ou secondaire.

11. Procédé d'établissement d'une session de service, sur une entité secondaire d'un premier utilisateur ayant une entité primaire associée à un abonnement, par un serveur, le procédé comprenant le fait
de recevoir (300) un identifiant unique de l'abonnement du premier utilisateur à partir de l'entité secondaire ; et
d'établir (310) la session de service à l'entité secondaire,
le procédé étant **caractérisé par** le fait de générer (302) une séquence de symboles ;
d'envoyer (304) la séquence de symboles à l'entité secondaire ;
de recevoir (306) une séquence de symboles depuis l'entité primaire ; et
de relever une concordance (308) selon laquelle la séquence de symboles reçue et la séquence de symboles envoyée sont identiques, dans lequel une concordance confirme que l'entité secondaire est authentifiée si l'entité primaire est authentifiée.

12. Procédé selon la revendication 11, dans lequel l'authentification de l'entité primaire comprend le fait
de recevoir un identifiant affecté et un identifiant unique de l'abonnement associé à l'entité primaire à partir de l'entité primaire sur une connexion entre l'entité primaire et le serveur ;
de vérifier que l'identifiant affecté et l'identifiant unique de l'abonnement de l'utilisateur concordent.

13. Procédé selon la revendication 12, dans lequel l'authentification comprend en outre un processus d'authentification initiale, le processus comprenant le fait
de générer un identifiant aléatoire ;
d'envoyer l'identifiant aléatoire à l'entité de l'utilisateur qui doit être utilisé en tant qu'identifiant affecté ;
de recevoir un identifiant affecté à travers un service de messagerie à partir de l'entité primaire ;
de relever une concordance selon laquelle l'identifiant affecté reçu et l'identifiant aléatoire sont identiques, dans lequel une concordance confirme que l'entité primaire de l'utilisateur est authentifiée.

14. Procédé selon l'une des revendications 11 à 13, dans lequel la session de service est établie sur l'entité primaire.

15. Procédé selon l'une des revendications 11 à 13, dans lequel la session de service est initiée par l'entité secondaire.

16. Procédé selon l'une des revendications 11 à 15, comprenant en outre le fait
de recevoir une notification de l'entité primaire indiquant que la session de service doit être déplacée vers l'entité primaire ; et
d'établir la session de service sur l'entité primaire.

17. Procédé selon l'une des revendications 11 à 16, comprenant en outre le fait
de recevoir un identifiant unique de l'abonnement du premier utilisateur à partir d'une entité tertiaire ;
de générer une deuxième séquence de symboles ; d'envoyer la deuxième séquence de symboles à l'entité tertiaire ;
de recevoir une séquence de symboles de l'entité primaire ou secondaire au serveur de telle sorte que le serveur soit capable de relever une concordance selon laquelle la séquence de symboles reçue et la séquence de symboles envoyée sont identiques, dans lequel une concordance confirme que l'entité tertiaire est authentifiée si l'entité envoyant la séquence de symboles est authentifiée ; et
d'établir la session de service sur l'entité tertiaire.

18. Procédé selon la revendication 17, comprenant en outre le fait
de recevoir une notification de l'entité primaire indiquant que la session de service doit être déplacée vers l'entité primaire ; et
d'établir la session de service sur l'entité primaire.

19. Support lisible par ordinateur comprenant un code de programme, qui lorsqu'il est exécuté par un processeur est agencé pour amener le processeur à mettre en oeuvre
la réception d'un identifiant unique de l'abonnement du premier utilisateur à partir de l'entité secondaire ; et
d'établir une session de service au niveau de l'entité secondaire ;
la mise en oeuvre étant **caractérisée par** le fait
de générer une séquence de symboles ;
d'envoyer la séquence de symboles à l'unité secondaire ;
de recevoir une séquence de symboles à partir de l'entité primaire ; et
de relever une concordance selon laquelle la séquence de symboles reçue et la séquence de symboles envoyée sont identiques, dans lequel une concordance confirme que l'entité secondaire est authentifiée si l'entité primaire est authentifiée.

20. Support lisible par ordinateur comprenant un code de programme, qui lorsqu'il est exécuté par un processeur est agencé pour amener le processeur à mettre en oeuvre
l'envoi d'un identifiant unique de l'abonnement du premier utilisateur de l'entité secondaire au serveur ; et
d'établir une session de service sur l'entité secondaire,
la mise en oeuvre étant **caractérisée par** le fait
de recevoir du serveur une séquence de symboles au niveau de l'entité secondaire ; et
de permettre l'envoi de la séquence de symboles de l'entité primaire au serveur de telle sorte que le serveur soit capable de relever une concordance selon laquelle la séquence de symboles reçue et la séquence de symboles envoyée sont identiques, dans lequel une concordance confirme que l'entité secondaire est authentifiée si l'entité primaire est authentifiée.

21. Programme d'ordinateur comprenant un code de programme, qui lorsqu'il est exécuté par un processeur est agencé pour amener le processeur à mettre en oeuvre le procédé selon l'une des revendications 1 à 18.

22. Serveur (700) agencé pour établir une session de service au niveau d'une entité secondaire d'un premier utilisateur ayant une entité primaire associée à un abonnement, le serveur comprenant
un récepteur (704) agencé pour recevoir un identifiant unique de l'abonnement du premier utilisateur à partir de l'entité secondaire ; et
un streamer (708) de contenu de service agencé pour établir une connexion de contenu de service au niveau de l'entité secondaire,
le serveur (700) étant **caractérisé par**
un générateur (710) de séquence de symboles agencé pour générer une séquence de symboles ;
un émetteur (706) agencé pour envoyer la séquence de symboles à l'entité secondaire, dans lequel le récepteur (704) est en outre agencé pour recevoir une séquence de symboles à partir de l'entité primaire ; et
un comparateur (712) agencé pour comparer la séquence de symboles reçue et la séquence de symboles envoyée, dans lequel l'entité secondaire est authentifiée si la séquence de symboles reçue et la séquence de symboles envoyée sont identiques et l'entité primaire est authentifiée.

23. Serveur (700) selon la revendication 22, comprenant en outre
un mécanisme (714) d'authentification agencé pour authentifier l'entité primaire, dans lequel le récepteur (704) est en outre agencé pour recevoir un identifiant affecté et un identifiant unique de l'abonnement associé à l'entité primaire à partir de l'entité primaire sur une connexion entre l'entité primaire et le serveur (700), le mécanisme (714) comprend en outre un contrôleur agencé pour vérifier que l'identifiant affecté et l'identifiant unique de l'abonnement d'utilisateur concordent.

24. Serveur (700) selon la revendication 23, dans lequel le mécanisme (714) d'authentification est en outre agencé pour réaliser un processus d'authentification initiale, le mécanisme (714) comprenant en outre un générateur agencé pour générer un identifiant aléatoire, dans lequel l'émetteur (706) est en outre agencé pour envoyer l'identifiant aléatoire à l'entité primaire de l'utilisateur qui doit être utilisé en tant qu'identifiant affecté, le récepteur (704) est en outre agencé pour recevoir un identifiant affecté au moyen d'un service de messagerie à partir de l'entité primaire, et le comparateur (712) est en outre agencé pour comparer l'identifiant affecté reçu et l'identifiant aléatoire, dans lequel l'entité primaire de l'utilisateur est authentifiée si l'identifiant affecté reçu et l'identifiant aléatoire sont identiques.
